# EUROPEAN PATENT SPECIFICATION

(11) **EP 3 474 559 B1**
(45) Date of publication and mention of the grant of the patent: **31.01.2024**
(21) Application number: 17823394.6
(22) Date of filing: 05.01.2017
(51) Int. Cl.: H04N 21/443, H04N 21/4782, H04N 21/439, H04N 21/426, H04N 21/472

(54) **SMART-TELEVISION PLAYBACK METHOD AND APPARATUS**
VERFAHREN UND VORRICHTUNG ZUR WIEDERGABE VON INTELLIGENTEM FERNSEHEN
PROCÉDÉ ET APPAREIL DE LECTURE DE TÉLÉVISION INTELLIGENTE

(30) Priority: 07.07.2016 CN 201610539072
(43) Date of publication of application: 24.04.2019
(73) Proprietor: Shenzhen Skyworth-RGB Electronic Co., Ltd., Shenzhen City, Guangdong 518057 (CN)
(72) Inventor: FAN, Yanbo, Shenzhen City Guangdong 518057 (CN)
(74) Representative: Osterhoff, Utz
(86) International application number: PCT/CN2017/070278
(87) International publication number: WO 2018/006581

(56) References cited:
- EP-A1- 2 922 303
- EP-A2- 2 581 853
- EP-A2- 2 581 853
- WO-A1-2015/035908
- CN-A- 102 413 297
- CN-A- 103 092 654
- CN-A- 103 092 654
- CN-A- 103 514 924
- CN-A- 104 902 290
- CN-A- 106 101 836
- KR-A- 20160 048 430
- US-A1- 2012 227 067
- US-A1- 2015 229 987
- US-A1- 2015 304 717
- US-A1- 2016 179 735
- Len Brown ET AL: "ACPI in Linux - Architecture, Advances, and Challenges", Proceedings of the Linux Symposium 2005, Volume One, July 20nd-23th, 2005 Ottawa, Ontario Canada, 1 July 2005 (2005-07-01), pages 51-67, XP055224056, Retrieved from the Internet: URL:https://www.kernel.org/doc/ols/2005/ol s2005v1-pages-59-76.pdf [retrieved on 2015-10-28]

## Description

### FIELD

The present disclosure relates to the field of communication, and more particularly relates to a smart television playing method and a smart television playing device.

### BACKGROUND

Currently, most of smart televisions developed by television manufactures are based on Android system. The Android system is now mature and stable, and a lot of native applications have been developed based on the Android system. The native applications of the Android system are almost developed by Java technology, and run in a Dalvik virtual machine or a Java virtual machine. During the running process, the native applications commonly have a high demand for CPU, memory, and so on.

However, with a rapid iterative update of the Android system and applications thereof, the hardware configuration of the smart television is difficult to support a fluent running of the updated Android system and applications due to a hysteretic update of the hardware configuration of the smart television, which results in that the playing of multimedia files of the smart television is not fluent enough.

Patent No. EP2922303A1 discloses a display device including a user interface module configured to receive first time source data from a user; a broadcast service module configured to receive a broadcast signal; a communication module configured to perform data communication with a network time protocol (NTP) server; a memory configured to store the plurality of time source data; and a controller configured to extract at least one of first time source data extracted from a setting application, second time source data extracted from the broadcast service module, third time source data extracted from the NTP server and set a time of an application in accordance with a predetermined priority order based on the extracted time source data.

Patent No. US2012227067A1 discloses a method for providing complementary information for principal information in a system having a first presentation device for presenting the principal information and a second presentation device for presenting the complementary information. The method comprises the steps of receiving a piece of principal information to be presented on the first presentation device; determining control information of at least one piece of complementary information associated with the received piece of principal information, wherein, the control information comprises a start time point for each piece of complementary information indicating when to present the complementary information, and sending an instruction message to instruct the second device to present the at least one piece of complementary information associated with the received piece of principal information based on the start time point contained in the control information and time information carried in the received piece of principal information.

Patent No. US2015304717A1 discloses a method for controlling a digital device. Herein, the method for controlling a digital device according to an exemplary embodiment of the present invention may include receiving a signal requesting for outputting a recommended content page, receiving recommended content page data of a most recently update version from a cloud server, and displaying the recommended content page received from the cloud server, wherein the recommended content page may include a first window including broadcast content information and a second window including VOD content information, and wherein the first window and the second window may include thumbnail images of each content.

Patent No. US2015229987A1 discloses a method of controlling a digital television, the method includes displaying content or application being executed on a display screen of the digital television, receiving a first signal requesting a menu to be displayed, and displaying the requested menu, overlaid on the display screen, wherein the menu includes a first part and a second part, wherein the first part displays at least one menu item corresponding to previously displayed content or previously executed application, and wherein the second part displays at least one menu item corresponding to content or an application executable in the digital television.

Patent No. WO2015/035908A1 & US20160227276A1 disclose an intelligent television operation system, comprising an application frame layer combining and repackaging each component interface and logic of component layer to simplify reusing mechanism of application for components of the component layer; an application execution environment layer providing execution explaining environment of application codes; a component layer comprising a digital television-associated component for supporting an intelligent television application, wherein each component provides a standard universal component interface for the application frame layer; a hardware abstraction layer performing abstraction on hardware functions of Linux core layer, hiding hardware interface details and providing virtual hardware platform to provide unified interface for the component layer, whereby the component layer is hardware-irrelevant and transplanting on multiple platforms is facilitated; and a Linux core layer managing process, managing memory, realizing network protocol and providing drive program for hardware platform of a intelligent television.

Patent No. KR20160048430A discloses a digital device and a service processing method for the same according to the present invention. Here, according to an embodiment of the present invention, a digital device comprises an input interface unit receiving image data, loading the image data, and receiving an editing command for the loaded image data; a decoder decoding the loaded image data; a scaler resizing the loaded image data; a control unit controlling the loading of the image data, the decoding and resizing of the loaded image data, and attaching the resized image data to a web browser and registering the attached image data therein; and an image processing unit editing the image data registered in the web browser. Here, the input interface unit further receives an image storage request. The control unit determines whether the resized image data is stored, when it is determined that the resized image data is not stored, controls redecoding the loaded image data, replacing the decoded image data with the redecoded image data as an output image, calculating output data, encoding the replaced image data, and storing or outputting the encoded image data.

### SUMMARY

It is one main object of the present disclosure to provide a smart television playing method and a smart television playing device, aiming to solve the technical problem in the prior art that the playing of multimedia files of the smart television is not fluent enough with the rapid iterative update of the Android system and applications thereof.

In order to realize the above aim, the present disclosure provides a smart television playing method, which is applied to a smart television of a WebKit-based WebOS, the WebKit-based WebOS is presented by means of Web pages to a user of the smart television, and all interactions of the user on the television and all uses of functions are performed by the Web, and the method includes:
starting a WebKit kernel process based on the Linux kernel and a driver layer, when the smart television is turned on;
starting a state management daemon, capturing, by the state management daemon, a key value input by a remote control, a keyboard or a button of the smart television in real time, and determining a control command received by the smart television according to the captured key value; and
sending the control command to a daemon corresponding to the control command via the WebKit kernel process, allowing the daemon to perform control operation corresponding to the control command,
the display interface of the smart television is a control interface displayed as a Web page, the operation of sending the control command to a daemon corresponding to the control command via the WebKit kernel process, allowing the daemon to perform control operation corresponding to the control command, includes:
   sending a play parameter of a shared multimedia file corresponding to a play command to an agent process via the WebKit kernel process calling a play interface of a player, allowing the agent process to parse the play parameter and send the parsed play parameter to a player daemon, if the control command is the play command of a shared multimedia file triggered based on the control interface; and
   playing the shared multimedia file according to the parsed play parameter, when the player daemon receives the play parameter parsed by the agent process.

In addition, in order to realize the above aim, the present disclosure also provides a smart television playing device, which is applied to a smart television of a WebKit-based WebOS, the WebKit-based WebOS is presented by means of Web pages to a user of the smart television, and all interactions of the user on the television and all uses of functions are performed by the Web, and the smart television playing device includes:
a first starting module, configured to start a WebKit kernel process based on the Linux kernel and a driver layer, and display a control interface of the smart television as a Web page, when the smart television is turned on;
a second starting module, configured to start a state management daemon, capture, by the state management daemon, a key value input by a remote control, a keyboard or a button of the smart television in real time, and determine a control command received by the smart television according to the captured key value; and
a sending module, configured to send the control command to a daemon corresponding to the control command via the WebKit kernel process, allowing the daemon to perform control operation corresponding to the control command,
the display interface of the smart television is a control interface displayed as a Web page, and the sending module includes:
   a sending unit, configured to send a play parameter of a shared multimedia file corresponding to a play command to an agent process via the WebKit kernel process calling a play interface of a player, allowing the agent process to parse the play parameter and send the parsed play parameter to a player daemon, if the control command is the play command of a shared multimedia file triggered based on the control interface; and
   a playing unit, configured to play the shared multimedia file according to the parsed play parameter, when the player daemon receives the play parameter parsed by the agent process.

In accordance with the present disclosure, it's first to start a WebKit kernel process based on the Linux kernel and a driver layer, when the smart television is turned on; next to start a state management daemon to detect a control command received by the smart television, then to send the control command to a daemon corresponding to the control command via the WebKit kernel process, so as for the daemon to perform control operation corresponding to the control command. This realizes play control by the WebKit kernel process sending the control command to the corresponding daemon, making it possible for the smart television adopting the WebKit-based WebOS without a middle layer, and improving the playing fluency of multimedia files of the smart television.

### BRIEF DESCRIPTION OF THE DRAWINGS

Fig.1 is an illustrative flowchart of a first aspect of a smart television playing method according to the invention;
Fig.2 is a detailed illustrative flowchart of the step of sending the control command to a daemon corresponding to the control command via the WebKit kernel process;
Fig.3 is a detailed illustrative flowchart of the step of sending the control command to a daemon corresponding to the control command via the WebKit kernel process;
Fig.4 is a detailed illustrative flowchart of the step of sending the control command to a daemon corresponding to the control command via the WebKit kernel process in an embodiment of a smart television playing method according to this disclosure;
Fig.5 is a detailed illustrative flowchart of the step of sending the control command to a daemon corresponding to the control command via the WebKit kernel process in another embodiment of a smart television playing method according to this disclosure;
Fig.6 is a functional module diagram of a first aspect of the smart television playing device according to this 2. invention;
Fig.7 is a detailed functional module diagram of sending module of a second aspect of present invention;
Fig.8 is a detailed functional module diagram of sending module of a third aspect of the smart television playing device according to present invention;
Fig.9 is a detailed functional module diagram of sending module of an embodiment of a smart television playing device according to this disclosure;
Fig.10 is a detailed functional module diagram of sending module of another embodiment of a smart television playing device according to this disclosure.

The realizing of the aim, functional characteristics and advantages of the present disclosure are further described in detail with reference to the accompanying drawings and the embodiments.

### DETAILED DESCRIPTION OF THE EMBODIMENTS

It will be appreciated that the specific embodiments described herein are merely illustrative of the present disclosure and are not intended to limit the present disclosure.

The scope of protection of the present invention is as defined in the appended claims.

The present disclosure provides a smart television playing method.

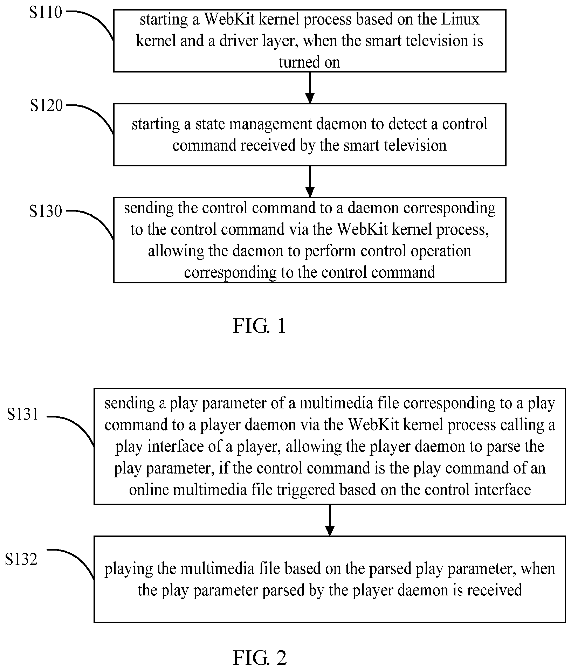

Referring to Fig.1, Fig.1 is an illustrative flowchart of a first aspect of a smart television playing method according to present invention.

The smart television playing method is applied to a smart television of the WebKit-based WebOS. The WebKit is an open source browser engine, based on which the WebOS (embedded operating system) of the smart television can be designed to implement. The WebOS is presented by means of Web pages to users of the smart television. All interactions of a user on the television, and all the use of functions are performed by the Web.

The smart television playing method includes the following steps:
S110, starting a WebKit kernel process based on the Linux kernel and a driver layer, when the smart television is turned on;

The Linux kernel is started when the smart television is turned on. An initialization process is started to mount the necessary file system, and to start system services or daemons. By the initialization, a WebKit kernel process is started, which is served as an intermediate interface for communication between the upper user space or applications and the system kernel.

A state management daemon (IR daemon) is started to capture the key value of a remote control in real time. A web page of the control interface is displayed on the display interface of the smart television, the web page including options for switching selections, clarities, play sources and so on. Users can trigger a play command of a multimedia file by limiting the option such as the switching selections or play sources and so on. The IR daemon determines whether the key value is the play command of the multimedia file according to the captured key value. S120, starting a state management daemon to detect a control command received by the smart television;

The state management daemon (IR daemon) is started to detect the control command input by a control terminal. Specifically, the IR daemon is configured to capture the key value input by a remote control, a keyboard or a button of the smart television in real time, and determine the corresponding control command according to the received key value.

S130, sending the control command to a daemon corresponding to the control command via the WebKit kernel process, allowing the daemon to perform control operation corresponding to the control command.

Specifically, the control command is sent to a player daemon via the WebKit kernel process, to realize play of an online multimedia file, when the control command is a play command of an online multimedia file; the volume adjustment command is sent to a system daemon via the WebKit kernel process, to realize volume adjustment of the smart television, when the control command is the volume adjustment command; the playback progress adjustment command is sent to a dispatch daemon via the WebKit kernel process, to realize playback progress adjustment of the multimedia file currently played by the smart television, when the control command is the playback progress adjustment command.

The smart television of the WebKit-based WebOS mainly include: a network module, including wired setting and wireless setting; a system module, including image setting, voice setting, Bluetooth setting, volume control, switch item setting (such as Dolby switch, surround sound switch), execution of Linux Shell and so on; a signal source module, configured to monitor the access and disconnection status of external devices such as HDMI, VA, S terminal, differential, RF and so on, and capable of switching to the corresponding signal source channel; a USB module, configured to monitor the plugging and unplugging status of USB external storage devices, and capable of performing operations such as browsing, playing and so on, on files in the USB storage devices; a player module, configured to realize playing and controlling of videos, music, pictures and stream medias as well as volume setting; a multi-screen interaction module, configured to realize the integration and docking with AirPlay, AirMirror, DLNA, Miracast, Samba and other functions; an IR module, configured to realize capture and distribution of key values of remote control; a background service module, docking with a background server, configured to mainly realize the Push message push, download, upgrade and other functions of the background server.

In the WebKit-based WebOS, all local function calling processes are divided into three categories, including: synchronous calling process: when implementing certain functions, it's to block to wait for results before performing other operations, usually these calling processes take a short time, such as obtaining the current volume value, obtaining the television image contrast value and so on; asynchronous calling process: when implementing certain functions, it's not to block for waiting for results, but to return immediately after calling so as to continue to perform other operations, when information of result data is received then to process, usually these calling processes take a long time, such as files downloading, WiFi hotspot scan, Samba scan and so on; event listening process: it's first to register concerned events, when these events occur information will be received, then to perform event process according to the information data, usually these processes take a short time, such as users the remote, USB and so on.

Further, when the control command is a WiFi hotspots scanning command, via the WebKit kernel process calling the WiFi hotspots scanning interface, WiFi hotspots in the environment where the smart television are located, and the WiFi hotspots obtained by scanning are stored in a WiFi list.

Specifically, the SkyNet.scanAsyn() is called in JavaScript, the method does not block to wait for the scanning result of WiFi hotspots, and the return value only indicates that whether WiFi hotspots scanning is normally started. In fact, the codes are implemented by executing the newly added SkyNet.cpp interface in the WebKit framework. In the codes of SkyNet::scanAsyn(), the WiFi hotspots scanning interface provided by SkyWifi.so is called. After completing the WiFi hotspots scanning, the scanning result is kept in a SkyWifiList object, and a message of completing scanning is added to the message queen of the WebKit window object. Then in the window.onmessage = function (event){ } in JavaScript, the message of completing WiFi hotspots scanning is received, and the corresponding logical processing is performed. Calling the SkyNet.scanAsyn interface in JavaScript is a typical asynchronous call process.

In order to realize the function of WiFi network setting in Web applications, the network setting interface objects are extended in the WebKit kernel framework, including: defining and realizing a plugin implementing WiFi network setting, the essence of SkyWifi.so is to call interfaces of libraries such as libutils, libcutils, libnetutils and so on to implement corresponding network setting, which is a dynamic library providing functional interface callings; creating a new directory SkyWebOS, and implementing three files in the SkyWebOS directory: SkyNet.idl, SkyNet.h and SkyNet.cpp. The SkyNet.idl is an interface definition file based on the idl standard, in which SkyNet interface objects and related methods and attributes are defined. The SkyNet.h and SkyNet.cpp complete the implementation of specific functions(C++ codes omitted herein), the implementation codes in the SkyNet.cpp are calling the packaged interfaces provided by the SkyWifi.so, and relevant code files that the SkyNet.h and SkyNet.cpp rely on are also copied to the SkyWebOS directory so that it can be compiled normally. In the working directory, according to the standard format already defined, compiling is executed after the file information of the SkyNet.idl, SkyNet.h, SkyNet.cpp and so on is added, so that the extended SkyNet interface object can be recognized and called in JavaScript; (6) recompiling the WebKit to generate the latest so file. The above content clarifies how to extend the functional interface objects in the WebKit framework, so that in the Web development process, the extended functional interfaces can be conveniently called by JavaScript, thereby realizing the localization function docking.

In accordance with the invention when the smart television is turned on, it's first to start a WebKit kernel process based on the Linux kernel and the driver layer, next to start a state management daemon to detect a control command received by the smart television, then to send the control command to a daemon corresponding to the control command via the WebKit kernel process, allowing the daemon to perform control operation corresponding to the control command. This realizes playing control via the WebKit kernel process sending the control command to the corresponding daemon, making the smart television adopting the WebKit-based WebOS is able to be without a middle layer, improving the playing fluency of multimedia files of the smart television.

A second aspect of a smart television playing method according to the present invention is provided referring to Fig.2, in the exemplary embodiment, the display interface of the smart television is a control interface displayed as a Web page, the step S130 includes:
S131, sending a play parameter of a multimedia file corresponding to a play command to a player daemon via the WebKit kernel process calling a play interface of a player, allowing the player daemon to parse the play parameter, if the control command is the play command of an online or a local multimedia file triggered based on the control interface;

When the control command is a play command of an online or a local multimedia file triggered based on the control interface, namely according to the captured key value, the IR daemon determines that the key value is the play command of an online file or a local multimedia file, by the WebKit kernel process calling the play interface of a player, a play parameter of the multimedia file corresponding to the play command is sent to a player daemon. Specifically, the play parameter of the multimedia file corresponding to the play command is sent to a player plugin, via the WebKit kernel process calling the play interface of a player, the player plugin sends the play parameter to a player daemon, and the player daemon parses the play parameter to obtain detailed play parameters. The play parameters include the play url, clarities, play time and so on.

S132, playing the multimedia file based on the parsed play parameter, when the play parameter parsed by the player daemon is received.

The player daemon plays the multimedia file according to the parsed play parameter. The play parameters include the play url, clarities, play time and so on.

When playing the multimedia file, the player daemon sends information to the dispatch daemon, if the playing of the multimedia file is detected to be not fluent, such as lagging. The dispatch daemon displays a web interface with prompt information which may be "the playing is not fluent, please try to switch the clarity" and so on.

In present invention when the control command is a play command of an online multimedia file triggered based on the control interface, play parameters of the multimedia file corresponding to the play command are sent to a player daemon via the WebKit kernel process calling the play interface of a player, so as for the player daemon to parse the play parameters. And the multimedia file is played based on the parsed play parameters, when the play parameters parsed by the player daemon are received. As such, playing of the online file or the local multimedia file by the WebKit kernel process is realized, and the playing fluency of the multimedia file of the smart television is improved.

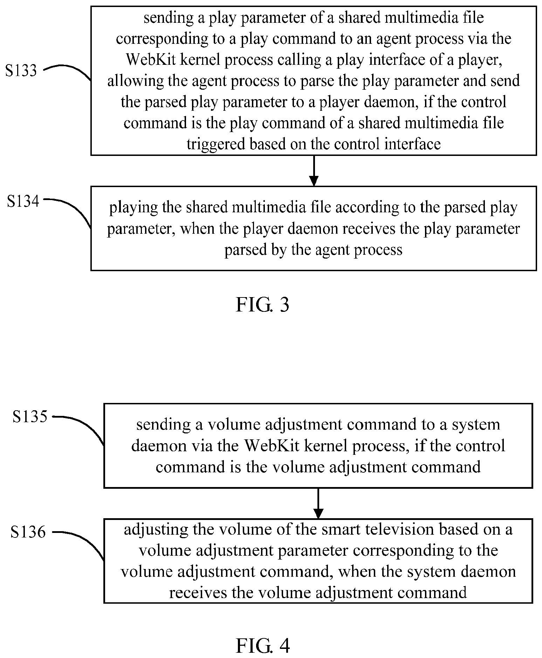

A third aspect of a smart television playing method according to the present invention is provided referring to Fig.3, where the display interface of the smart television is a control interface displayed as a Web page, the step S130 includes:
S133, sending a play parameter of a shared multimedia file corresponding to a play command to an agent process via the WebKit kernel process calling a play interface of a player, allowing the agent process to parse the play parameter and send the parsed play parameter to a player daemon, if the control command is the play command of a shared multimedia file triggered based on the control interface;

When the control command is a play command of a multimedia file triggered based on the control interface, if the multimedia file is a shared multimedia file, namely a samba multimedia file, a play parameter of the shared multimedia file corresponding to the play command is sent to a player plugin via the WebKit kernel process calling the play interface of a player. The player plugin sends the play parameter to the agent process. The agent process parses the play parameter to obtain parameters including the play url, clarities, play time and so on, and sends the parsed play parameters to a player daemon.

S134, playing the shared multimedia file according to the parsed play parameter, when the player daemon receives the play parameter parsed by the agent process.

When the control command is a play command of a shared multimedia file triggered based on the control interface, play parameters of the shared multimedia file corresponding to the play command are sent to an agent process via the WebKit kernel process calling the play interface of a player, so as for the agent process to parse the play parameters and send the parsed play parameters to a player daemon. And the shared multimedia file is played based on the parsed play parameters, when the player daemon receiving the play parameters parsed by the agent process. As such, playing of the shared multimedia file of the smart television via the WebKit kernel process is realized, avoiding the problem that the player daemon can not parse play parameters of a shared multimedia file, and improving the playing fluency of the multimedia file of the smart television.

An embodiment of a smart television playing method according to the present disclosure is provided referring to Fig.4, the step S130 includes:
S135, sending a volume adjustment command to a system daemon via the WebKit kernel process, if the control command is the volume adjustment command;

In this embodiment, the IR daemon captures the key value of a remote control in real time, and a volume adjustment command is sent to a system daemon via a dispatch daemon, when the command corresponding to the key value captured by the IR daemon is the volume adjustment command.

S136, adjusting the volume of the smart television based on a volume adjustment parameter corresponding to the volume adjustment command, when the system daemon receives the volume adjustment command.

For example, the volume of the smart television is increased according to the change value corresponding to the volume adjustment command, when the volume adjustment command is to increase volume; and the volume of the smart television is decreased according to the change value corresponding to the volume adjustment command, when the volume adjustment command is to decrease volume.

In this embodiment, the volume adjustment command is sent to a system daemon when the control command is a volume adjustment command. Volume of the smart television is adjusted according to a volume adjustment parameter corresponding to the volume adjustment command, when the system daemon receives the volume adjustment command. As such, volume adjustment of the smart television via the WebKit kernel process is realized, and the playing fluency of the multimedia file of the smart television is improved.

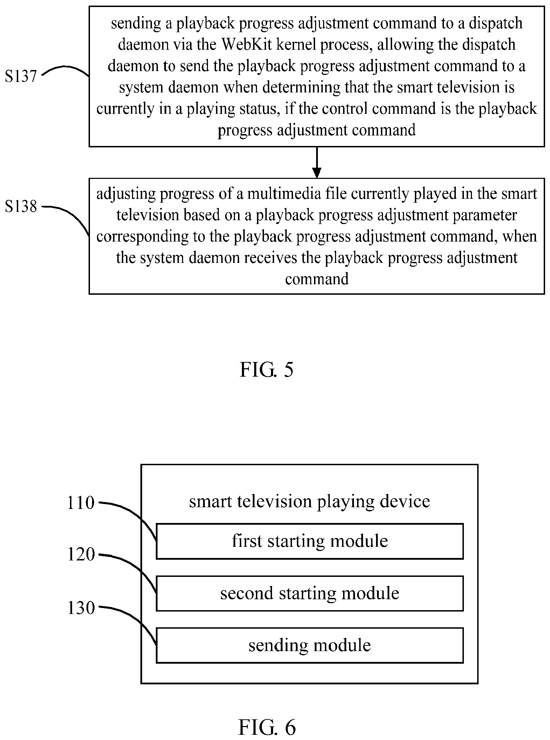

Another embodiment of a smart television playing method according to the present disclosure is provided referring to Fig.5, the step S130 includes:
S137, sending a playback progress adjustment command to a dispatch daemon via the WebKit kernel process, allowing the dispatch daemon to send the playback progress adjustment command to a system daemon when determining that the smart television is currently in a playing status, if the control command is the playback progress adjustment command;

When the control command detected by the IR daemon is a playback progress adjustment command, the playback progress adjustment command is sent to a dispatch daemon. The dispatch daemon determines whether the smart television is currently in a state of playing, and when determining that the smart television is currently in a state of playing, the dispatch daemon sends the playback progress adjustment command to a system daemon, or, when determining that the smart television is currently in a state of playing, the dispatch daemon sends information to the IR daemon to inform that the smart television is currently in a state of playing, then the IR daemon sends the playback progress adjustment command to a system daemon.

S138, adjusting progress of the multimedia file currently played in the smart television based on a playback progress adjustment parameter corresponding to the playback progress adjustment command, when the system daemon receives the playback progress adjustment command.

When the system daemon receives the playback progress adjustment command, progress of the multimedia file currently played by the smart television is adjusted according to a playback progress adjustment parameter corresponding to the playback progress adjustment command. For example, if the playback progress adjustment parameter includes a fast forward parameter, the playing progress of the multimedia file currently played by the smart television is fast forwarded according to the fast forward parameter. Or if the playback progress adjustment parameter includes adjustment time for fast forward or fast backward, the multimedia file is played at the time after adding or subtracting the adjustment time from the current time.

In this embodiment, when the control command detected by the state management daemon is a playback progress adjustment command, the playback progress adjustment command is sent to a dispatch daemon, so as for the dispatch daemon, when determining that the smart television is in a state of playing, to send the playback progress adjustment command to a system daemon, later when the system daemon receiving the playback progress adjustment command, based on playback progress adjustment parameters corresponding to the playback progress adjustment command, progress of the multimedia file currently played by the smart television is adjusted. This realizes progress adjustment of the multimedia file currently played by the smart television via the WebKit kernel process, further improving the playing fluency of multimedia files of smart televisions.

The present disclosure further provides a smart television playing device. Referring to Fig.6, Fig.6 is a functional module diagram of a first aspect of a smart television playing device according to this invention.

The smart television playing device is applied to a smart television of the WebKit-based WebOS. The WebKit is an open source browser engine, based on which the WebOS(embedded operating system) of the smart television can be designed to implement. The WebOS is presented by means of Web pages to users of the smart television. All interactions of a user on the television, and all the use of functions are performed by the Web. The smart television playing device includes:
a first starting module 110, configured to start a WebKit kernel process based on the Linux kernel and a driver layer, and display a control interface of the smart television as a Web page, when the smart television is turned on;

When the smart television is turned on, the Linux kernel is started, and an initialization process is started to mount the necessary file system, and to start system services or daemons. By the initialization process, a WebKit kernel process is started, which is served as an intermediate interface for communication between the upper user space or applications and the system kernel.

The state management daemon( IR daemon) is started to capture the key value of a remote control in real time. A web page of the control interface is displayed on the display interface of the smart television, the web page including options for switching selections, clarities, play sources and so on. Users can trigger a play command of a multimedia file by limiting the option such as the switching selections or play sources and so on. The IR daemon determines whether the key value is the play command of the multimedia file according to the captured key value. a second starting module 120, configured to start a state management daemon to detect a control command received by the smart television; and
a sending module 130, configured to send the control command to a daemon corresponding to the control command via the WebKit kernel process, allowing the daemon to perform control operation corresponding to the control command.

When the smart television is turned on, the first starting module 110 starts a WebKit kernel process based on the Linux kernel and the driver layer, next the second starts module 120 starts an IR daemon to detect the control command received by the smart television, then the sending module 130, via the WebKit kernel process, sends the control command to a daemon corresponding to the control command, so as for the daemon to perform control operations corresponding to the control command. This realizes playing control via the WebKit kernel process sending the control command to the corresponding daemon, making the smart television adopting the WebKit-based WebOS is able to be without a middle layer, improving the playing fluency of multimedia files of the smart television.

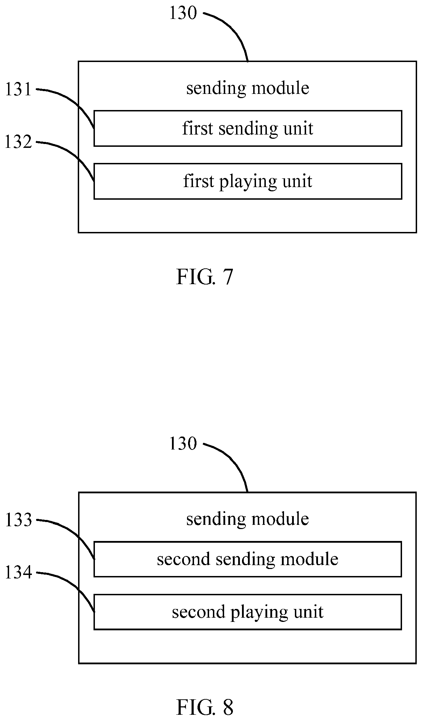

A second aspect of a smart television playing device according to the present invention is provided referring to Fig.7, in
this example the display interface of the smart television is a control interface displayed as a Web page. The sending module 130 includes:
a first sending unit 131, configured to send a play parameter of a multimedia file corresponding to a play command to a player daemon via the WebKit kernel process calling a play interface of a player, allowing the player daemon to parse the play parameter, if the control command is the play command of an online multimedia file triggered based on the control interface;

When the control command is a play command of an online or a local multimedia file triggered based on the control interface, namely according to the captured key value, the IR daemon determines that the key value is a play command of an online or a local multimedia file, the first sending unit 131, via the WebKit kernel process calling the play interface of a player, sends play parameters of the multimedia file corresponding to the play command to a player daemon. Specifically, via the WebKit kernel process calling the play interface of a player, play parameters of the multimedia file corresponding to the play command are sent to a player plugin, the player plugin sends the play parameters to a player daemon, and the player daemon parses the play parameters to obtain detailed play parameters, wherein, the play parameters include the play url, clarities, play time and so on.
a first playing unit 132, configured to play the multimedia file based on the parsed play parameter, when the play parameter parsed by the player daemon is received.

The first playing unit 132 plays the multimedia file according to the parsed play parameters, wherein, the play parameters include the play url, clarities, play time and so on.

When the control command is a play command of an online multimedia file triggered based on the control interface, the first sending unit 131, via the WebKit kernel process calling the play interface of a player, sends play parameters of the multimedia file corresponding to the play command to a player daemon, so as for the player daemon to parse the play parameters, and when the play parameters parsed by the player daemon are received, the first playing unit 132 plays the multimedia file based on the parsed play parameters. This realizes playing of online or local multimedia files via the WebKit kernel process, further improving the playing fluency of multimedia files of the smart television.

A third aspect of a smart television playing device according to the present invention is provided referring to Fig.8, in this example, the display interface of the smart television is a control interface displayed as a Web page. The sending module 130 includes:
a second sending unit 133, configured to send a play parameter of a shared multimedia file corresponding to a play command to an agent process via the WebKit kernel process calling a play interface of a player, allowing the agent process to parse the play parameter and send the parsed play parameter to a player daemon, if the control command is the play command of a shared multimedia file triggered based on the control interface;

When the control command is a play command of a multimedia file triggered based on the control interface, if the multimedia file is a shared multimedia file, namely a samba multimedia file, via the WebKit kernel process calling the play interface of a player, play parameters of the multimedia file corresponding to the play command are sent to a player plugin, then the player plugin sends the play parameters to an agent process, the agent process parses the play parameters to obtain parameters including the play url, clarities, play time and so on, and sends the parsed play parameters to a player daemon.
a second playing unit 134, configured to play the shared multimedia file according to the parsed play parameter, when the player daemon receives the play parameter parsed by the agent process.

When the control command is a play command of a shared multimedia file triggered based on the control interface, via the WebKit kernel process calling the play interface of a player, play parameters of the shared multimedia file corresponding to the play command are sent to an agent process, so as for the agent process to parse the play parameters and send the parsed play parameters to a player daemon; then when the player daemon receiving the play parameters parsed by the agent process, based on the parsed play parameters, the shared multimedia file is played. This realizes playing of shared multimedia files of the smart television via the WebKit kernel process, avoiding the problem that the player daemon can not parse play parameters of a shared multimedia file, further improving the playing fluency of multimedia files of the smart television.

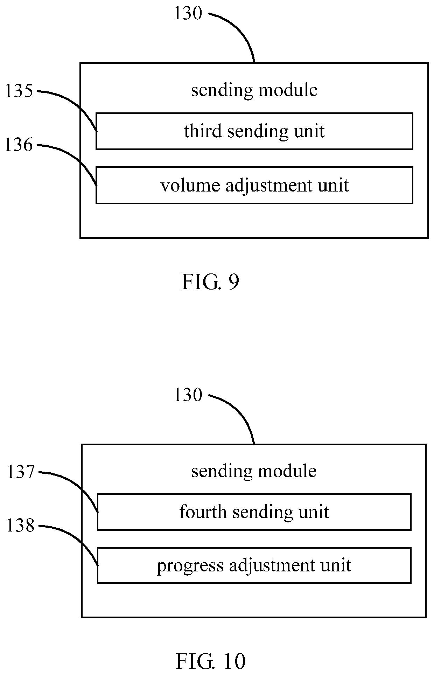

An embodiment of a smart television playing device according to the present disclosure is provided referring to Fig.9, the sending module 130 includes:
a third sending unit 135, configured to send a volume adjustment command to a system daemon via the WebKit kernel process, if the control command is the volume adjustment command;

In this embodiment, the IR daemon captures the key value of a remote control in real time, and when the command corresponding to the key value captured by the IR daemon is a volume adjustment command, the volume adjustment command is sent to a system daemon by a dispatch daemon.
a volume adjustment unit 136, configured to adjust the volume of the smart television based on a volume adjustment parameter corresponding to the volume adjustment command, when the system daemon receives the volume adjustment command.

For example, when the volume adjustment command is to increase volume, according to the change value corresponding to the volume adjustment command, the volume of the smart television is increased; when the volume adjustment command is to decrease volume, according to the change value corresponding to the volume adjustment command, the volume of the smart television is decreased.

In this embodiment, when the control command is a volume adjustment command, the third sending unit 135 sends the volume adjustment command to a system daemon, and when the system daemon receives the volume adjustment command, the volume adjustment unit 136 adjusts volume of the smart television according to volume adjustment parameters corresponding to the volume adjustment command. This realizes volume adjustment of the smart television via the WebKit kernel process, further improving the playing fluency of multimedia files of the smart television.

Another embodiment of a smart television playing device according to the present disclosure is provided based on the first embodiment, referring to Fig. 10, the sending module 130 includes:
a fourth sending unit 137, configured to send a playback progress adjustment command to a dispatch daemon via the WebKit kernel process, allowing the dispatch daemon to send the playback progress adjustment command to a system daemon when determining that the smart television is currently in a playing status, if the control command is the playback progress adjustment command;

When the control command detected by the IR daemon is a playback progress adjustment command, the playback progress adjustment command is sent to a dispatch daemon. The dispatch daemon determines whether the smart television is currently in a state of playing, and when determining that the smart television is currently in a state of playing, the dispatch daemon sends the playback progress adjustment command to a system daemon, or, when determining that the smart television is currently in a state of playing, the dispatch daemon sends information to the IR daemon to inform that the smart television is currently in a state of playing, then the IR daemon sends the playback progress adjustment command to a system daemon.
a progress adjustment unit 138, configured to adjust progress of the multimedia file currently played in the smart television based on a playback progress adjustment parameter corresponding to the playback progress adjustment command, when the system daemon receives the playback progress adjustment command.

When the system daemon receives the playback progress adjustment command, according to playback progress adjustment parameters corresponding to the playback progress adjustment command, progress of the multimedia file currently played by the smart television is adjusted. For example, if the playback progress adjustment parameters include a fast forward parameter, according to the fast forward parameter, the playing progress of the multimedia file currently played by the smart television is fast forwarded, or, if the playback progress adjustment parameters include adjustment time for fast forward or fast backward, the multimedia file is played at the time after adding or subtracting the adjustment time from the current time.

In this embodiment, when the control command detected by the IR daemon is a playback progress adjustment command, the fourth sending unit 137 sends the playback progress adjustment command to a dispatch daemon, so as for the dispatch daemon, when determining that the smart television is in a state of playing, to send the playback progress adjustment command to a system daemon, then when the system daemon receiving the playback progress adjustment command, based on playback progress adjustment parameters corresponding to the playback progress adjustment command, the progress adjustment unit 138 adjusts progress of the multimedia file currently played by the smart television. This realizes progress adjustment of the multimedia file currently played by the smart television via the WebKit kernel process, further improving the playing fluency of multimedia files of smart televisions.

The foregoing description merely portrays some illustrative embodiments in accordance with the invention, as defined by the claims, and therefore is not intended to limit the patentable scope of the disclosure.

## Claims

1. A smart television playing method, wherein the smart television playing method is applied to a smart television of a WebKit-based WebOS, the smart television playing method comprises:
starting (S110) a WebKit kernel process based on the Linux kernel and a driver layer, when the smart television is turned on;
wherein the WebKit-based WebOS is presented by means of Web pages to a user of the smart television, and all interactions of the user on the television and all uses of functions are performed by the Web, the web page comprises options for switching selections, clarities, and play sources, and the smart television playing method further comprises:
starting (S120) a state management daemon to detect a control command received by the smart television, wherein the state management daemon is configured to capture a key value input by a remote control, a keyboard or a button of the smart television in real time, and determine the control command according to the captured key value; and
sending (S130) the control command to a daemon corresponding to the control command via the WebKit kernel process, allowing the daemon to perform control operation corresponding to the control command,
**characterized in that**, the display interface of the smart television is a control interface displayed as a Web page, the operation of sending (S130) the control command to a daemon corresponding to the control command via the WebKit kernel process, allowing the daemon to perform control operation corresponding to the control command, comprises:
sending (S133) a play parameter of a shared multimedia file corresponding to a play command to an agent process via the WebKit kernel process calling a play interface of a player, allowing the agent process to parse the play parameter and send the parsed play parameter to a player daemon, if the control command is the play command of a shared multimedia file triggered based on the control interface; and
playing (S134) the shared multimedia file according to the parsed play parameter, when the player daemon receives the play parameter parsed by the agent process.

2. A smart television playing device, wherein the smart television playing device is applied to a smart television of a WebKit-based WebOS, the smart television playing device comprises:
a first starting module (110), configured to start a WebKit kernel process based on the Linux kernel and a driver layer, and display a control interface of the smart television as a Web page, when the smart television is turned on;
wherein the WebKit-based WebOS is presented by means of Web pages to a user of the smart television, and all interactions of the user on the television and all uses of functions are performed by the Web, the web page comprises options for switching selections, clarities, and play sources, and the smart television playing device further comprises:
a second starting module (120), configured to start a state management daemon to detect a control command received by the smart television, wherein the state management daemon is configured to capture a key value input by a remote control, a keyboard or a button of the smart television in real time, and determine the control command according to the captured key value; and
a sending module (130), configured to send the control command to a daemon corresponding to the control command via the WebKit kernel process, allowing the daemon to perform control operation corresponding to the control command,
**characterized in that**, the display interface of the smart television is a control interface displayed as a Web page, and the sending module (130) comprises:
a sending unit (133), configured to send a play parameter of a shared multimedia file corresponding to a play command to an agent process via the WebKit kernel process calling a play interface of a player, allowing the agent process to parse the play parameter and send the parsed play parameter to a player daemon, if the control command is the play command of a shared multimedia file triggered based on the control interface; and
a playing unit (134), configured to play the shared multimedia file according to the parsed play parameter, when the player daemon receives the play parameter parsed by the agent process.

## Patentansprüche

1. Wiedergabeverfahren von intelligentem Fernsehen, wobei das Wiedergabeverfahren von intelligentem Fernsehen auf ein intelligentes Fernsehen eines WebKit-basierten WebOS angewendet wird, wobei das Wiedergabeverfahren von intelligentem Fernsehen umfasst:
Starten (S110) eines WebKit-Kernel-Prozesses basierend auf dem Linux-Kernel und einer Treiberschicht, wenn das intelligente Fernsehen eingeschaltet wird;
wobei das WebKit-basierte WebOS mittels Webseiten einem Benutzer des intelligenten Fernsehen präsentiert wird, wobei alle Interaktionen des Benutzers auf dem Fernsehen und alle Verwendungen von Funktionen durch das Web durchgeführt werden, wobei die Webseite Optionen zum Umschalten von Auswahlen, Klarheiten und Wiedergabequellen umfasst, und wobei das Wiedergabeverfahren von intelligentem Fernsehen ferner umfasst:
Starten (S120) eines Zustandsverwaltungs-Daemons, um einen von dem intelligentem Fernsehen empfangenen Steuerbefehl zu erfassen, wobei der Zustandsverwaltungs-Daemon so konfiguriert ist, dass er einen durch eine Fernbedienung, eine Tastatur oder eine Taste des intelligentem Fernsehens eingegebenen Tastenwert in Echtzeit erfasst und den Steuerbefehl gemäß dem erfassten Tastenwert bestimmt; und
Senden (S130) des Steuerbefehls über den WebKit-Kernel-Prozess an einen Daemon, der dem Steuerbefehl entspricht, so dass der Daemon die dem Steuerbefehl entsprechende Steueroperation durchführen kann,
**dadurch gekennzeichnet, dass** die Anzeigeschnittstelle des intelligenten Fernsehens eine Steuerschnittstelle ist, die als Webseite angezeigt wird, wobei der Vorgang des Sendens (S130) des Steuerbefehls über den WebKit-Kernel-Prozess an einen Daemon, der dem Steuerbefehl entspricht, so dass der Daemon die dem Steuerbefehl entsprechende Steueroperation durchführen kann, umfasst:
Senden (S133) eines Wiedergabeparameters einer gemeinsam genutzten Multimediadatei, der einem Wiedergabebefehl entspricht, an einen Agentenprozess über den WebKit-Kernel-Prozess sendet, der eine Wiedergabeschnittstelle eines Players aufruft, was es dem Agentenprozess ermöglicht, den Wiedergabeparameter zu analysieren und den analysierten Wiedergabeparameter an einen Player-Daemon zu senden, wenn der Steuerbefehl den Wiedergabebefehl einer gemeinsam genutzten Multimediadatei ist, der basierend auf der Steuerschnittstelle ausgelöst wurde; und
Wiedergeben (S134) der gemeinsam genutzten Multimediadatei entsprechend dem geparsten Wiedergabeparameter, wenn der Player-Daemon den vom Agentenprozess geparsten Wiedergabeparameter empfängt.

2. Wiedergabevorrichtung von intelligentem Fernsehen, wobei die Wiedergabevorrichtung auf einen intelligenten Fernsehen eines WebKit-basierten WebOS angewendet wird, wobei die Wiedergabevorrichtung von intelligentem Fernsehen umfasst:
ein erstes Startmodul (110), das so konfiguriert ist, dass es einen WebKit-Kernel-Prozess basierend auf dem Linux-Kernel und einer Treiberschicht startet und eine Steuerschnittstelle des intelligenten Fernsehens als Webseite anzeigt, wenn das intelligente Fernsehen eingeschaltet wird; wobei das WebKit-basierte WebOS mittels Webseiten einem Benutzer des intelligenten Fernsehen präsentiert wird, wobei alle Interaktionen des Benutzers auf dem Fernsehen und alle Verwendungen von Funktionen durch das Web durchgeführt werden, wobei die Webseite Optionen zum Umschalten von Auswahlen, Klarheiten und Wiedergabequellen umfasst, und wobei die Wiedergabevorrichtung von intelligentem Fernsehen ferner umfasst:
ein zweites Startmodul (120), das so konfiguriert ist, dass es einen Zustandsverwaltungs-Daemons startet, um einen von dem intelligentem Fernsehen empfangenen Steuerbefehl zu erfassen, wobei der Zustandsverwaltungs-Daemon so konfiguriert ist, dass er einen durch eine Fernbedienung, eine Tastatur oder eine Taste des intelligentem Fernsehens eingegebenen Tastenwert in Echtzeit erfasst und den Steuerbefehl gemäß dem erfassten Tastenwert bestimmt; und
ein Sendemodul (130), das so konfiguriert ist, dass es das Steuerbefehl über den WebKit-Kernel-Prozess an einen Daemon sendet, der dem Steuerbefehl entspricht, so dass der Daemon die dem Steuerbefehl entsprechende Steueroperation durchführen kann,
**dadurch gekennzeichnet, dass** die Anzeigeschnittstelle des intelligenten Fernsehens eine Steuerschnittstelle ist, die als Webseite angezeigt wird, wobei das Sendemodul (130) umfasst:
ein Sendemodul (133), das so konfiguriert ist, dass es eines Wiedergabeparameters einer gemeinsam genutzten Multimediadatei, der einem Wiedergabebefehl entspricht, an einen Agentenprozess über den WebKit-Kernel-Prozess sendet, der eine Wiedergabeschnittstelle eines Players aufruft, was es dem Agentenprozess ermöglicht, den Wiedergabeparameter zu analysieren und den analysierten Wiedergabeparameter an einen Player-Daemon zu senden, wenn der Steuerbefehl den Wiedergabebefehl einer gemeinsam genutzten Multimediadatei ist, der basierend auf der Steuerschnittstelle ausgelöst wurde; und
eine Wiedergebeeinheit (134), die so konfiguriet ist, dass sie der gemeinsam genutzten Multimediadatei entsprechend dem geparsten Wiedergabeparameter widergibt, wenn der Player-Daemon den vom Agentenprozess geparsten Wiedergabeparameter empfängt.

## Revendications

1. Procédé de lecture d'une télévision intelligente, dans lequel le procédé de lecture d'une télévision intelligente est utilisable à une télévision intelligente équipé d'un système WebOS basé sur WebKit, le procédé de lecture d'une télévision intelligente comprenant :
démarrer (S110) un processus de noyau WebKit basé sur le noyau Linux et une couche d'entraînement, lorsque la télévision intelligente est allumée ;
dans lequel le système WebOS basé sur WebKit est présenté au moyen de pages Web à un utilisateur de la télévision intelligente, et toutes les interactions de l'utilisateur sur la télévision et toutes les utilisations des fonctions sont effectuées à travers le Web, la page Web comprend des options pour définir des sélections, des clartés et des sources de lecture, et le procédé de lecture d'une télévision intelligente comprend en outre :
démarrer (S120) un démon de gestion d'état pour détecter une instruction de commande reçue par la télévision intelligente, dans lequel le démon de gestion d'état est configuré pour capturer une valeur de clé saisie à travers une télécommande, un clavier ou un bouton de la télévision intelligente en temps réel, et déterminer l'instruction de commande en fonction de la valeur de clé capturée ; et
envoyer (S130) l'instruction de commande à un démon correspondant à l'instruction de commande à travers le processus de noyau WebKit, et permettre au démon d'effectuer une opération de commande correspondant à l'instruction de commande,
**caractérisé en ce que**, une interface d'affichage de la télévision intelligente est une interface de commande affichée sous la forme d'une page Web, et l'opération d'envoyer (S130) l'instruction de commande à un démon correspondant à l'instruction de commande à travers le processus de noyau WebKit et permettre au démon d'effectuer une opération de commande correspondant à l'instruction de commande, comprend :
envoyer (S133) un paramètre de lecture d'un fichier multimédia partagé correspondant à une instruction de lecture à un processus d'agent à travers le processus de noyau WebKit appelant une interface de lecture d'un lecteur, permettre au processus d'agent d'analyser le paramètre de lecture et d'envoyer le paramètre de lecture analysé à un démon de lecteur, si l'instruction de commande est l'instruction de lecture d'un fichier multimédia partagé déclenché à partir de l'interface de commande ; et
lire (S134) le fichier multimédia partagé en fonction du paramètre de lecture analysé, lorsque le démon de lecture reçoit le paramètre de lecture analysé par le processus d'agent.

2. Dispositif de lecture d'une télévision intelligente, dans lequel le dispositif de lecture d'une télévision intelligente est utilisable à une télévision intelligente équipé d'un système WebOS basé sur WebKit, le dispositif de lecture d'une télévision intelligente comprenant :
un premier module de démarrage (110), configuré pour démarrer un processus de noyau WebKit basé sur le noyau Linux et une couche d'entraînement, et pour afficher une interface de commande de la télévision intelligente sous la forme d'une page Web, lorsque la télévision intelligente est allumée ;
dans lequel le système WebOS basé sur WebKit est présenté au moyen de pages Web à un utilisateur de la télévision intelligente, et toutes les interactions de l'utilisateur sur la télévision et toutes les utilisations des fonctions sont effectuées à travers le Web, la page Web comprend des options pour définir des sélections, des clartés et des sources de lecture, et le procédé de lecture d'une télévision intelligente comprend en outre :
un deuxième module de démarrage (120), configuré pour démarrer un démon de gestion d'état pour détecter une instruction de commande reçue par la télévision intelligente, dans lequel le démon de gestion d'état est configuré pour capturer une valeur de clé saisie à travers une télécommande, un clavier ou un bouton de la télévision intelligente en temps réel, et déterminer l'instruction de commande en fonction de la valeur de clé capturée ; et
un module d'envoi (130), configuré pour envoyer l'instruction de commande à un démon correspondant à l'instruction de commande à travers le processus de noyau WebKit, et permettre au démon d'effectuer une opération de commande correspondant à l'instruction de commande,
**caractérisé en ce que**, l'interface de commande de la télévision intelligente est une interface de commande affichée sous la forme d'une page Web, et le module d'envoi (130) comprend :
une unité d'envoi (133), configurée pour envoyer un paramètre de lecture d'un fichier multimédia partagé correspondant à une instruction de lecture à un processus d'agent à travers le processus de noyau WebKit appelant une interface de lecture d'un lecteur, et pour permettre au processus d'agent d'analyser le paramètre de lecture et d'envoyer le paramètre de lecture analysé à un démon de lecteur, si l'instruction de commande est l'instruction de lecture d'un fichier multimédia partagé déclenché à partir de l'interface de commande ; et
une unité de lecture (134), configurée pour lire le fichier multimédia partagé en fonction du paramètre de lecture analysé, lorsque le démon de lecture reçoit le paramètre de lecture analysé par le processus d'agent.
